# FASCICULE DE BREVET EUROPEEN

(11) **EP 2 447 159 B1**
(45) Date de publication et mention de la délivrance du brevet: **12.08.2015**
(21) Numéro de dépôt: 11306375.4
(22) Date de dépôt: 25.10.2011
(51) Int. Cl.: B64D 29/08, B64D 29/06

(54) **Capot d'aéronef incorporant des moyens pour limiter les phénomènes d'écope de type pneumatique**
Verkleidung eines Luftfahrzeugs, die mit Mitteln zur Begrenzung von Stauphänomenen ausgestattet ist
Aircraft cowl including a means for limiting pneumatic scoop phenomena

(30) Priorité: 26.10.2010 FR 1058784
(43) Date de publication de la demande: 02.05.2012
(73) Titulaire: Airbus Opérations SAS, 31060 Toulouse (FR)
(72) Inventeur: Porte, Alain, 31770 Colomiers (FR); Chelin, Frédéric, 32430 Encausse (FR); Surply, Thierry, 31700 Cornebarrieu (FR)
(74) Mandataire: Fantin, Laurent

(56) Documents cités:
- EP-A1- 1 336 707
- FR-A1- 2 933 957
- FR-A1- 2 939 410

## Description

La présente invention se rapporte à un capot d'aéronef incorporant des moyens pour limiter les phénomènes d'écope de type pneumatique.

Un ensemble propulsif d'aéronef comprend une nacelle dans laquelle est disposée de manière sensiblement concentrique une motorisation reliée par l'intermédiaire d'un mât au reste de l'aéronef.

FR 2 939 410 A1 divulgue les caractéristiques du préambule de la revendication 1.

La nacelle comprend une paroi intérieure délimitant un conduit avec une entrée d'air à l'avant, une première partie du flux d'air entrant, appelée flux primaire, traversant la motorisation pour participer à la combustion, la seconde partie du flux d'air, appelée flux secondaire, étant entraînée par une soufflante et s'écoulant dans un conduit annulaire délimité par la paroi intérieure de la nacelle et la paroi extérieure de la motorisation.

La nacelle comprend également une paroi extérieure de section sensiblement circulaire, qui s'étend depuis l'entrée d'air jusqu'à la sortie arrière, constituée par la juxtaposition de plusieurs éléments, une entrée d'air sensiblement rigide à l'avant suivie de portes de nacelle, également appelées capots.

L'entrée d'air est rigide en raison de ses formes courbes et des nombreux renforts pour résister aux efforts générés par les écoulements aérodynamiques ou aux éventuels chocs.

Les capots sont rendus mobiles pour autoriser !'accès à la motorisation placée à l'intérieur de la nacelle. Ces capots sont articulés au reste de la nacelle de différentes manières en fonction de la cinématique retenue et s'étendent depuis le haut de la nacelle, à proximité de l'encrage du mât, jusqu'au bas de la nacelle et ont une forme demi-cylindrique.

Un capot comprend généralement une tôle avec des raidisseurs sur la surface intérieure pour lui conférer une rigidité relative. La surface extérieure lisse du capot est sensée rester dans le prolongement de la surface extérieure des autres éléments, notamment de l'entrée d'air, lorsque le capot est en position fermée.

Des moyens de verrouillage sont prévus au niveau du bord inférieur du capot afin de maintenir le capot en position fermée.

En complément, le cadre de l'ouverture obturée par le capot comprend sur au moins une partie de sa périphérie une surface de contact contre laquelle peut prendre appui le capot de manière à garder sa surface extérieure toujours dans le prolongement de celle de l'entrée d'air.

Eventuellement, la surface de contact du cadre peut comprendre un élément déformable tel qu'un joint comprimable.

Pour assurer un positionnement du capot par rapport au reste de la nacelle selon l'axe longitudinal qui correspond également à l'axe de pivotement du capot, il est possible de prévoir au niveau des bords amont et aval (perpendiculaires à l'axe de pivotement) du cadre de !'ouverture des formes complémentaires aux formes prévues au niveau des bords amont et aval du capot. Ainsi, le bord amont (et/ou aval) du cadre comprend une gorge et le bord amont (et/ou aval) du capot comprend une forme en saillie qui se loge dans la gorge prévue au niveau du cadre. Ces éléments permettent de guider le capot lors de sa fermeture de manière à ce qu'il soit correctement positionné selon l'axe de pivotement lorsqu'il est fermé.

Durant le vol, compte tenu de leurs rigidités relatives, les capots peuvent se déformer, notamment selon la direction radiale si bien que de l'air peut pénétrer sous lesdits capots à l'intérieur de la nacelle au niveau de la jonction avec l'entrée d'air. Ce phénomène d'écope réduit les performances aérodynamiques de l'aéronef, notamment en augmentant la traînée, ce qui se traduit par une surconsommation en carburant.

Afin de limiter ce phénomène, une solution consiste à augmenter le nombre de raidisseurs prévus au niveau des capots. Cependant, cette solution va à l'encontre du résultat souhaité dans la mesure où l'ajout de raidisseurs contribue à augmenter la masse embarquée et donc la consommation de l'aéronef.

Selon une autre alternative, il est possible de prévoir un système de ceinture comme illustré dans la demande de brevet FR-2.933.957.

La présente invention propose une alternative aux solutions de l'art antérieur qui limite les phénomènes d'écope, sans augmenter significativement la masse embarquée et les coûts de maintenance.

A cet effet, l'invention a pour objet une nacelle d'aéronef comprenant au niveau de sa paroi extérieure un capot mobile par rapport au reste de la nacelle de manière à obturer ou dégager une ouverture, ledit capot comportant une articulation par rapport au reste de la nacelle et des moyens de verrouillage/déverrouillage distant du bord amont dudit capot qui comprend des moyens pour limiter l'apparition des phénomènes d'écope, caractérisée en ce que lesdits moyens pour limiter l'apparition du phénomène d'écope comprennent au moins un verrou solidaire du reste de la nacelle ou respectivement du capot susceptible d'occuper un état dit bloqué dans lequel une partie du verrou interfère avec le capot ou respectivement le reste de la nacelle et empêche une déformation comportant une composante radiale dudit capot et un autre état dit libre dans lequel ladite partie du verrou n'interfère plus avec le capot ou respectivement le reste de la nacelle et autorise le mouvement d'ouverture dudit capot, le passage d'un état à l'autre étant généré grâce à une variation de pression d'un gaz.

D'autres caractéristiques et avantages ressortiront de la description qui va suivre de l'invention, description donnée à titre d'exemple uniquement, en regard des dessins annexés sur lesquels :
- la figure 1 est une vue en perspective illustrant une nacelle d'aéronef,
- la figure 2A est une coupe illustrant le bord amont d'un capot d'une nacelle d'aéronef selon une première variante de l'invention à l'état bloqué,
- la figure 2B est une coupe illustrant le bord amont d'un capot d'une nacelle d'aéronef selon une première variante de l'invention à l'état libre,
- la figure 3 est une coupe illustrant le bord amont d'un capot d'une nacelle d'aéronef selon une autre variante de l'invention à l'état bloqué,
- la figure 4 est une coupe illustrant le bord amont d'un capot d'une nacelle d'aéronef selon une autre variante de l'invention à l'état bloqué, et
- la figure 5 est une coupe illustrant le bord amont d'un capot d'une nacelle d'aéronef selon une variante simplifiée de l'invention à l'état bloqué.

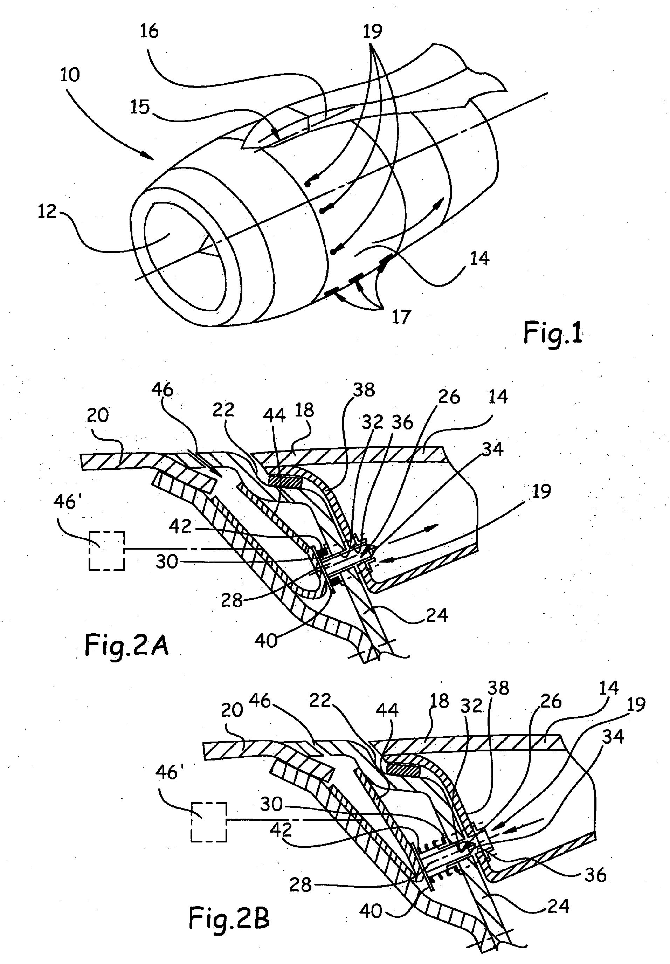

Sur la figure 1, on a représenté une nacelle 10 contenant une motorisation et reliée au reste de l'aéronef par un mât. Elle comprend une paroi extérieure de section sensiblement circulaire, qui s'étend depuis une entrée d'air 12 jusqu'à une sortie arrière, constituée par la juxtaposition de plusieurs éléments, l'entrée d'air 12 sensiblement rigide à !'avant suivie de portes 14 de nacelle, également appelées capots.

Les capots 14 comprennent une articulation 15 par rapport au reste de la nacelle 10 pour les rendre mobiles et autoriser l'accès à la motorisation. Ainsi, ces capots 14 permettent d'obturer ou de dégager une ouverture délimitée par un cadre.

Ces capots 14 sont articulés au reste de la nacelle de différentes manières en fonction de la cinématique retenue et s'étendent depuis le haut de la nacelle, à proximité de l'ancrage du mât, jusqu'au bas de la nacelle et ont une forme demi-cylindrique.

Un capot 14 comprend généralement une tôle avec des raidisseurs sur la surface intérieure pour lui conférer une rigidité relative. La surface extérieure lisse du capot est sensée rester dans le prolongement de la surface extérieure des autres éléments, notamment de l'entrée d'air, lorsque le capot est en position fermée.

Pour la suite de la description, la direction longitudinale correspond à la direction de l'axe de rotation de la soufflante de la motorisation. Un plan médian vertical correspond à un plan vertical contenant l'axe longitudinal.

Une direction radiale est une direction perpendiculaire à la direction longitudinale.

Un plan tangentiel en un point donné correspond à un plan perpendiculaire à la direction radiale passant par ledit point.

Les positions amont et aval sont définies en référence à la direction de l'écoulement des gaz à l'intérieur de la motorisation.

Selon un mode de réalisation, une nacelle comprend deux capots 14 symétriques par rapport au plan médian vertical de la nacelle, chaque capot pouvant pivoter autour d'un axe de rotation 16 orienté selon la direction longitudinale et disposé à proximité du mât (approximativement à 12h).

Ainsi, les capots 14 peuvent occuper plusieurs états, à savoir un état fermé dans lequel les surfaces extérieures des capots sont disposées dans le prolongement des surfaces des parties de la nacelle en amont et aval des capots et un état ouvert dans lequel le capot à pivoter et autorise l'accès à la motorisation.

Les bords inférieurs des capots sont sensiblement parallèles aux axes de pivotement 16 et sont reliés entre eux à l'état fermé par des moyens de verrouillage/déverrouillage 17.

La nacelle, le ou les capots, l'articulation du capot par rapport au reste de la nacelle, les moyens de verrouillage/déverrouillage du capot ne sont pas plus décrits car ils sont connus de l'homme du métier.

Les bords amont et aval du capot relient les bords inférieur et supérieur du capot.

Ces bords amont et aval coopèrent avec les bords amont et aval du cadre de l'ouverture. Des moyens de positionnement et de guidage peuvent être prévus pour positionner correctement le bord amont (ou aval) du capot avec le bord amont (ou aval) de l'ouverture par exemple une gorge en V au niveau du bord de l'ouverture qui coopère avec une rainure prévue au niveau du bord du capot ou des couteaux prévus au niveau du bord du capot qui coopèrent avec des logements prévus au niveau du bord de l'ouverture.

Les moyens de positionnement permettent d'assurer le positionnement du capot selon la direction de l'axe de pivotement 16 du capot. L'invention n'est pas limitée à ces modes de réalisation, D'autres solutions sont envisageables pour positionner le capot par rapport à l'ouverture.

Dans tous les cas, pour permettre l'ouverture et la fermeture du capot, les moyens de positionnement n'assurent pas le positionnement du capot par rapport au reste de la nacelle selon une direction correspondant à la direction du mouvement d'ouverture et de fermeture du capot qui correspond sensiblement à la direction radiale. Par conséquent, compte tenu de la distance entre I°axe de pivotement 16 et les moyens de verrouillageldéverroui!lage 17, le capot 14 peut se déformer selon la direction radiale et engendrer un phénomène d'écope.

Pour ne pas altérer ses caractéristiques aérodynamiques, la nacelle comprend des moyens 19 pour limiter la déformation du capot et l'apparition du phénomène d'écope.

Sur les figures 2A, 2B, 3 à 5, on a représenté en coupe dans un plan contenant l'axe longitudinal de la motorisation, le bord amont 18 du capot qui coopère avec le bord amont 20 de l'ouverture. Ce dernier comprend un décrochement 22 permettant de loger l'extrémité du bord 18 du capot de manière à ce que la surface extérieure du capot soit disposée dans le prolongement de la surface extérieure du reste de la nacelle.

L'ouverture est délimitée par un cadre comprenant une paroi 24 au niveau du bord amont qui est perpendiculaire ou inclinée par rapport aux surfaces extérieures de la nacelle.

Selon l'invention, les moyens 19 pour limiter l'apparition du phénomène d'écope comprennent au moins un verrou 26 solidaire du cadre de l'ouverture (plus généralement du reste de la nacelle) dont une partie est susceptible d'occuper un état dit bloqué dans lequel la partie du verrou interfère avec le capot 14 et empêche une déformation comportant une composante radiale dudit capot et un autre état dit libre dans lequel ladite partie du verrou 26 n'interfère plus avec le capot et autorise le mouvement d'ouverture dudit capot.

Selon un point important de l'invention, le verrou 26 est de type pneumatique à savoir le passage d'un état à l'autre est généré grâce à une variation de pression d'un gaz.

En variante, le verrou pourrait être solidaire du capot.

Selon les cas, la nacelle 10 peut comprendre un ou plusieurs verrous 26 disposés dans les zones au niveau desquelles sont susceptibles d'apparaître des phénomènes d'écope, notamment au niveau des zones situées approximativement à 3h et/ou à 9h.

Selon un premier mode de réalisation illustré sur les figures 2A et 2B, le verrou 26 comprend une tige 28 guidée en translation par une portée 30 sous forme d'un tube solidaire de la paroi 24 du cadre de l'ouverture, ladite tige 28 se translatant selon une direction sécante à la direction radiale. De préférence, la tige peut se translater selon une direction contenue dans un plan longitudinal et faisant un angle supérieur à 60° par rapport à la direction radiale.

Selon la variante illustrée sur les figures 2A et 2B, la portée 30 est fixée au niveau de la face intérieure de la paroi 24 et traverse ladite paroi 24 via un orifice 32. La tige 28 comprend une première extrémité 34 susceptible de coopérer avec un orifice 36 ménagé dans une paroi 38 solidaire du capot.

La portée 30, les orifices 32 et 36 sont disposés de manière à être alignés lorsque le capot est correctement fermé. De même, la portée 30 et l'orifice 36 ont des sections adaptées à celles de la tige de manière à ce que la tige 28 puisse coulisser sans jeu ou avec un jeu très faible par rapport à la portée 30 et à l'orifice 36.

Avantageusement, la première extrémité 34 est arrondie pour faciliter le centrage de la tige 28 par rapport à l'orifice 36.

La tige 28 peut coulisser entre un premier état bloqué dans lequel elle interfère avec la paroi 38 et pénètre dans l'orifice 36 et un second état libre dans lequel elle n'interfère pas avec la paroi 38 et ne pénètre pas dans l'orifice 36.

La tige 28 comprend au niveau de sa seconde extrémité une collerette 40 qui assure la fonction de butée.

Des moyens de rappel sont prévus pour maintenir la tige 28 à l'état libre. Selon un mode de réalisation, un ressort de compression 42 est intercalé entre la collerette 40 et la paroi 24 ou la portée 30.

Pour assurer le passage de l'état libre à l'état bloqué et le maintien à l'état bloqué, la nacelle comprend au moins une commande.

Selon la variante illustrée sur les figures 2A et 2B, la commande est une membrane 44 sous la forme d'une vessie dont le volume peut varier en fonction de la pression présente à l'intérieur de ladite vessie.

Cette membrane 44 comprend une partie intercalée entre la seconde extrémité de la tige 28 et une butée de manière à ce que la membrane 44 exerce un effort à l'encontre des moyens de rappel 42 et engendre le passage et/ou le maintien à l'état bloqué de la tige 28 lorsque la pression appliquée à la membrane 44 est supérieure à un seuil donné. Ainsi, lorsque la pression à l'intérieur de la vessie est supérieure au seuil donné alors le verrou est à l'état bloqué, comme illustré sur la figure 2A. A contrario, lorsque la pression à l'intérieur de la vessie est inférieure à un seuil donné alors le verrou est à l'état libre en raison de l'action des moyens de rappel 42, comme illustré sur la figure 2B.

Pour assurer le fonctionnement du verrou, la nacelle comprend des moyens pour alimenter la commande en air comprimé.

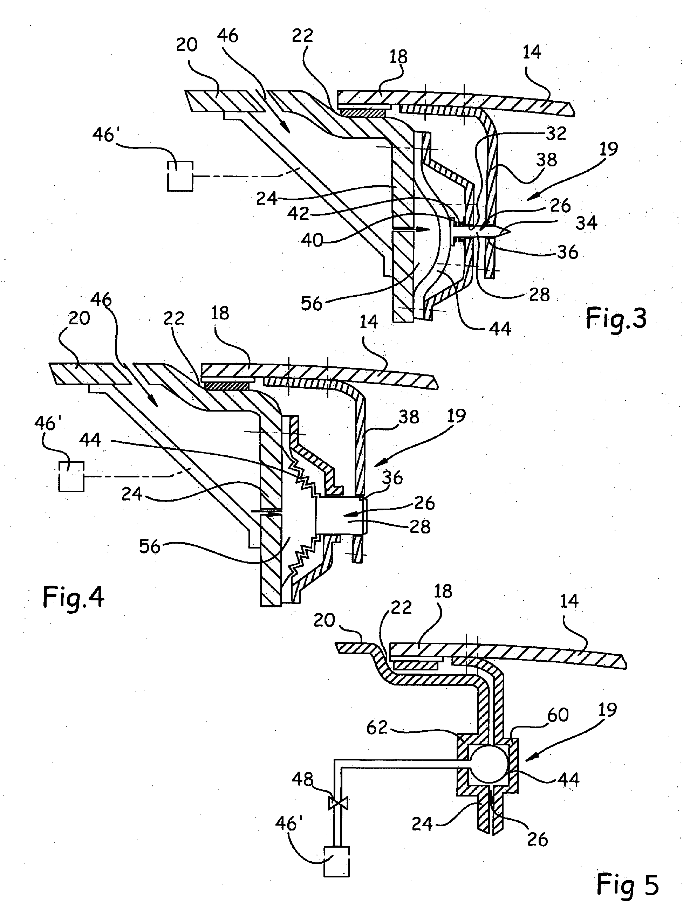

Selon une première variante illustrée sur les figures 2A, 2B et 3, la nacelle peut comprend au niveau de sa paroi extérieure un piquage 46 relié à la vessie 44, ledit piquage étant incliné de manière à permettre le remplissage de la vessie lorsque l'aéronef est en vol.

Ainsi, la pression à l'intérieur de la vessie augmente avec la vitesse de l'aéronef. Cet agencement permet d'obtenir une alimentation d'air pilotée naturellement. En effet, le passage à l'état bloqué s'effectue lorsque la vitesse de l'aéronef dépasse une valeur prédéterminée, les phénomènes d'écope apparaissant à des vitesses supérieures à ladite valeur prédéterminée.

Selon une autre variante, la commande peut être alimentée par un autre piquage 46' (en trait mixte sur les figures 2A, 2B, 3 et 4) en prélevant de l'air au niveau de la veine ou du canal moteur ou tout autre gaz sous pression au niveau d'une tuyauterie pressurisée de la motorisation. Dans ce cas, il convient de prévoir des moyens 48 pour piloter l'alimentation, par exemple une vanne motorisée.

Toutefois, l'invention n'est pas limitée aux modes de réalisation précisés ci-dessus mais en couvre toutes les variantes concernant les moyens pour alimenter la commande.

Sur la figure 3, on a représenté une autre variante proche de celle décrite sur les figures 2A et 2B. Selon cette variante, la tige 28 peut se translater selon une direction perpendiculaire à la direction radiale. Selon une autre différence, la commande se présente sous la forme d'une membrane 44 qui délimite une cavité dans laquelle est injecté de l'air sous pression. La variation de pression à l'intérieur de ladite cavité déforme la membrane 44 qui déplace alors le verrou à l'encontre des moyens de rappel.

Selon les variantes précédentes, le verrou et la commande sont deux éléments distincts.

Sur les figures 4 et 5, on a représenté d'autres variantes pour lesquelles le verrou et la commande sont reliés et forme une seule pièce.

Selon la variante illustrée sur la figure 4, le verrou est solidaire d'une membrane 44 et se présente sous la forme d'une tige 28 qui coopère ou non avec l'orifice 36 ménagé dans la paroi 38 solidaire du capot 14.

Pour assurer le retour et le maintien à l'état libre, la membrane 44 peut se présenter sous la forme d'un soufflet et être réalisée en un matériau élastique, de préférence à mémoire de forme, la forme de la membrane sans contrainte correspondant à celle qu'elle occupe à l'état libre.

Comme pour la variante illustrée sur la figure 3, la membrane 44 délimite une cavité 56 qui peut être alimentée en gaz sous pression. Lorsque la pression dépasse un certain seuil dans la cavité 56, la membrane 44 se déforme, ce qui se traduit par l'engagement de la tige 28 dans l'orifice 36.

Selon cette variante, le verrou se translate de préférence selon une direction perpendiculaire à la direction radiale.

Selon une variante illustrée sur la figure 5, la commande et le verrou se présente sous la forme d'une membrane 44 et plus précisément d'un boudin qui s'étend sur au moins une partie du bord amont de l'ouverture, qui est immobilisé selon une direction radiale par rapport au cadre de l'ouverture et qui, lorsque la pression à l'intérieur du boudin dépasse un certain seuil, coopère avec une gorge 60 ménagée sur au moins une partie du bord amont du capot et ouverte vers l'avant de la nacelle et empêche la déformation dudit capot en limitant son mouvement selon la direction radiale.

Avantageusement, la paroi 24 du cadre de l'ouverture comprend également une gorge 62 en vis-à-vis de la gorge 60 pour immobiliser le boudin par rapport au cadre selon la direction radiale.

Ainsi, lorsque la pression à l'intérieur du boudin dépasse un certain seuil, une partie du boudin est engagée dans la gorge 60 et empêche une déformation radiale du capot.

A contrario, lorsque la pression à l'intérieur du boudin n'est pas suffisante, le boudin n'est pas suffisamment rigide pour immobiliser le capot qui peut alors être manoeuvré.

## Revendications

1. Nacelle (10) d'aéronef comprenant au niveau de sa paroi extérieure un capot (14) mobile par rapport au reste de la nacelle (10) de manière à obturer ou dégager une ouverture, ledit capot (14) comportant une articulation (15) par rapport au reste de la nacelle (10) et des moyens de verrouillage/déverrouillage (17) distant du bord amont (18) dudit capot (14) qui comprend des moyens (19) pour limiter l'apparition des phénomènes d'écope, lesdits moyens (19) pour limiter l'apparition du phénomène d'écope comprennent au moins un verrou (26) solidaire du reste de la nacelle (10) ou respectivement du capot (14) susceptible d'occuper un état dit bloqué dans lequel une partie du verrou (26) interfère avec le capot (14) ou respectivement le reste de la nacelle (10) et empêche une déformation comportant une composante radiale dudit capot (14) et un autre état dit libre dans lequel ladite partie du verrou (26) n'interfère plus avec le capot (14) ou respectivement le reste de la nacelle (10) et autorise le mouvement d'ouverture dudit capot (10), **caractérisée en ce que** le passage d'un état à l'autre étant généré grâce à une variation de pression d'un gaz.

2. Nacelle d'aéronef selon la revendication 1, caractérisée ce qu'elle comprend une membrane (44) qui s'étend sur au moins une partie du bord amont de l'ouverture, qui est immobilisé selon une direction radiale par rapport au cadre de l'ouverture et qui, lorsque la pression appliquée sur la membrane (44) dépasse un certain seuil, coopère avec une gorge (60) ménagée sur au moins une partie du bord amont du capot (14) et ouverte vers l'avant de la nacelle (10).

3. Nacelle d'aéronef selon la revendication 2, **caractérisée en ce qu'**elle comprend une gorge (62) au niveau du cadre de l'ouverture, en vis-à-vis de la gorge (60) pour immobiliser la membrane (44) par rapport au cadre selon la direction radiale.

4. Nacelle d'aéronef selon la revendication 1, **caractérisée en ce que** le verrou (26) comprend une tige (28) guidée en translation selon une direction contenue dans un plan longitudinal et faisant un angle supérieur à 60° par rapport à la direction radiale.

5. Nacelle d'aéronef selon la revendication 4, **caractérisée en ce que** le verrou (26) est solidaire d'une membrane (44) et se présente sous la forme d'une tige (28) qui coopère ou non avec un orifice (36) ménagé dans une paroi (38) solidaire du capot (14).

6. Nacelle d'aéronef selon la revendication 5, **caractérisée en ce que** la membrane (44) se présente sous la forme d'un soufflet réalisé en un matériau élastique.

7. Nacelle d'aéronef selon la revendication 4, **caractérisée en ce qu'**elle comprend des moyens de rappel (42) pour maintenir le verrou (26) à l'état libre et une commande alimentée en gaz sous pression pour maintenir le verrou (26) à l'état bloqué à l'encontre des moyens de rappel (42).

8. Nacelle d'aéronef selon la revendication 7, **caractérisée en ce qu'**elle comprend un piquage (46) au niveau de sa surface extérieure relié à la commande pour l'alimenter en air sous pression.

9. Nacelle d'aéronef selon la revendication 7, **caractérisée en ce qu'**elle comprend un piquage (46') au niveau de la veine ou du canal moteur relié à la commande pour l'alimenter en air sous pression.

10. Nacelle d'aéronef selon la revendication 7, **caractérisée en ce qu'**elle comprend un piquage (46') au niveau d'une canalisation pressurisée de la motorisation relié à la commande pour l'alimenter en un gaz sous pression.

## Patentansprüche

1. Gondel (10) eines Luftfahrzeuges, die im Bereich ihrer äußeren Wand eine Verkleidung (14) aufweist, die bezüglich der übrigen Gondel (10) beweglich ist, um eine Öffnung abzudecken oder freizulegen, wobei die Verkleidung (14) eine Gelenkeinrichtung (15) bezüglich der übrigen Gondel (10) und Mittel zum Verriegeln/Entriegeln (17) aufweist, die sich im Abstand zum stromaufwärts gelegenen Rand (18) der Verkleidung (14) befinden und die Mittel (19) aufweisen, um das Auftreten von Stauphänomenen zu begrenzen, wobei die Mittel (19), um das Auftreten des Stauphänomens zu begrenzen, wenigstens einen Riegel (26) aufweisen, der an der übrigen Gondel (10) oder beziehungsweise an der Verkleidung (14) angebracht ist und dazu geeignet ist, einen sogenannten blockierten Zustand einzunehmen, in dem ein Teil des Riegels (26) in die Verkleidung (14) oder beziehungsweise in die übrige Gondel (10) eingreift und eine Deformation verhindert, die eine radiale Komponente der Verkleidung (14) umfasst, und einen sogenannten freien Zustand einzunehmen, in dem dieser Teil des Riegels (26) nicht mehr in die Verkleidung (14) oder beziehungsweise die übrige Gondel (10) eingreift und die Öffnungsbewegung der Verkleidung (10) zulässt, **dadurch gekennzeichnet, dass** der Übergang von dem einen Zustand in den anderen Zustand durch die Änderung eines Gasdrucks bewerkstelligt ist.

2. Gondel eines Luftfahrzeuges nach Anspruch 1, **dadurch gekennzeichnet, dass** diese eine Membran (44) aufweist, die sich über wenigstens einen Teil des stromaufwärts gelegenen Randes der Öffnung erstreckt, die bezüglich einer radialen Richtung in Bezug auf den Rahmen der Öffnung ruhig gestellt ist und die, wenn der auf die Membran (44) ausgeübte Druck eine bestimmte Schwelle überschreitet, mit einer Vertiefung (60) zusammenwirkt, die auf wenigstens einen Teil des stromaufwärts gelegenen Randes der Verkleidung (14) ausgebildet ist und die zum vorderen Teil der Gondel (10) hin offen ist.

3. Gondel eines Luftfahrzeuges nach Anspruch 2, **dadurch gekennzeichnet, dass** diese im Bereich des Rahmens der Öffnung eine der Vertiefung (60) gegenüberliegende Vertiefung (62) hat, um die Membran (44) in Bezug auf den Rahmen in eine radiale Richtung ruhig zu stellen.

4. Gondel eines Luftfahrzeuges nach Anspruch 1, **dadurch gekennzeichnet, dass** der Riegel (26) einen Stift (28) aufweist, dessen Translationsbewegung in eine Richtung geführt ist, die in einer longitudinalen Ebene liegt, und einen Winkel größer 60° bezüglich der radialen Richtung einnimmt.

5. Gondel eines Luftfahrzeuges nach Anspruch 4, **dadurch gekennzeichnet, dass** der Riegel (26) an einer Membran (44) angebracht ist und als Stift (28) ausgebildet ist, der mit einer Öffnung (36) zusammenwirkt oder nicht zusammenwirkt, die in einer an der Verkleidung (14) angebrachten Wand (38) ausgebildet ist.

6. Gondel eines Luftfahrzeuges nach Anspruch 5, **dadurch gekennzeichnet, dass** die Membran (44) als Balg ausgebildet ist, der aus einem elastischen Material hergestellt ist.

7. Gondel eines Luftfahrzeuges nach Anspruch 4, **dadurch gekennzeichnet, dass** diese Rückstellmittel (42) aufweist, um den Riegel (26) im freien Zustand zu halten, und ein mit Gas mit Unterdruck versorgtes Stellmittel, um den Riegel (26) gegen die Rückstellmittel (42) im blockierten Zustand zu halten.

8. Gondel eines Luftfahrzeuges nach Anspruch 7, **dadurch gekennzeichnet, dass** diese einen Anschluss (46) im Bereich seiner äußeren Oberfläche aufweist, der mit dem Stellmittel verbunden ist, um dieses mit Luft mit Unterdruck zu versorgen.

9. Gondel eines Luftfahrzeuges nach Anspruch 7, **dadurch gekennzeichnet, dass** diese im Bereich des Außenkanals oder des Motorkanals einen Anschluss (46') aufweist, der mit dem Stellmittel verbunden ist, um dieses mit Luft mit Unterdruck zu versorgen.

10. Gondel eines Luftfahrzeuges nach Anspruch 7, **dadurch gekennzeichnet, dass** diese im Bereich einer Druckkanalisation der Motorisierung einen Anschluss (46') aufweist, der mit dem Stellmittel verbunden ist, um dieses mit Gas mit Unterdruck zu versehen.

## Claims

1. Aircraft nacelle (10) that at its outside wall comprises a cowl (14) that can move relative to the rest of the nacelle (10) in such a way as to block or unblock an opening, whereby said cowl (14) comprises an articulation (15) relative to the rest of the nacelle (10) and locking/unlocking means (17) distant from the upstream edge (18) of said cowl (14) that comprises means (19) for limiting the appearance of scooping phenomena, said means (19) for limiting the appearance of the scooping phenomenon comprise at least one lock (26) that is integral with the rest of the nacelle (10) or respectively the cowl (14) that can occupy a so-called locked state in which a part of the lock (26) interferes with the cowl (14) or respectively the rest of the nacelle (10) and prevents a deformation that comprises a radial component of said cowl (14) and another so-called free state in which said part of the lock (26) no longer interferes with the cowl (14) or respectively the rest of the nacelle (10) and allows the opening movement of said cowl (14), **characterized in that** the switch from one state to the next is generated by a pressure variation of a gas.

2. Aircraft nacelle according to Claim 1, wherein it comprises a membrane (44) that extends over at least a part of the edge that is upstream from the opening, which is immobilized in a radial direction relative to the frame of the opening and which, when the pressure that is applied on the membrane (44) exceeds a certain threshold, works with a groove (60) that is made on at least one part of the edge that is upstream from the cowl (14) and open toward the front of the nacelle (10).

3. Aircraft nacelle according to Claim 2, wherein it comprises a groove (62) at the frame of the opening, opposite the groove (60), for immobilizing the membrane (44) relative to the frame in the radial direction.

4. Aircraft nacelle according to Claim 1, wherein the lock (26) comprises a rod (28) that is guided in translation in a direction that is contained in a longitudinal plane and that makes an angle that is greater than 60° relative to the radial direction.

5. Aircraft nacelle according to Claim 4, wherein the lock (26) is integral with a membrane (44) and comes in the form of a rod (28) that may or may not work with an opening (36) that is made in a wall (38) that is integral with the cowl (14).

6. Aircraft nacelle according to Claim 5, wherein the membrane (44) comes in the form of a bellows that is made of an elastic material.

7. Aircraft nacelle according to Claim 4, wherein it comprises return means (42) for keeping the lock (26) in the free state and a control supplied with pressurized gas to keep the lock (26) in the state that is locked against the return means (42).

8. Aircraft nacelle according to Claim 7, wherein it comprises a tap (46) at its outside surface that is connected to the control for supplying it with pressurized air.

9. Aircraft nacelle according to Claim 7, wherein it comprises a tap (46') at the throat or the engine channel connected to the control to supply it with pressurized air.

10. Aircraft nacelle according to Claim 7, wherein it comprises a tap (46') at a pressurized duct of the power plant connected to the control for supplying it with a pressurized gas.
